# EUROPÄISCHE PATENTANMELDUNG

(11) **EP 1 266 878 A1**
(43) Veröffentlichungstag der Anmeldung: **18.12.2002**
(21) Anmeldenummer: 02012858.3
(22) Anmeldetag: 11.06.2002
(51) Int. Cl.: C04B 41/00, C04B 41/45, C04B 41/50, C04B 33/24, C04B 33/28, C04B 33/32, C04B 35/622, C04B 35/64, B32B 18/00

(54) **Verfahren und Vorrichtung zur Herstellung von keramischen Formkörpern**

(30) Priorität: 15.06.2001 DE 10128664
(71) Anmelder: Technische Universität Clausthal, 38678 Clausthal-Zellerfeld (DE)
(72) Erfinder: Krause, Tobias, Dipl.-Ing., 38678 Clausthal-Zellerfeld (DE); Günster, Jens, Dr. rer. nat., 38678 Clausthal-Zellerfeld (DE); Engler, Sven, Dipl.-Ing., 38678 Clausthal-Zellerfeld (DE); Heinrich, Jürgen G., Prof. Dr. Ing., 38678 Clausthal-Zellerfeld (DE)
(74) Vertreter: Gerstein, Hans Joachim

(57) **Zusammenfassung**

Ein Verfahren zur Herstellung von keramischen Formkörpern durch Sintern von ausgewählten Stellen eines keramischen Materials mit einem Laserstrahl zur Bildung des Formkörpers hat die Schritte von:
- Auftragen von mindestens einer Schicht einer flüssigen Suspension oder plastischen Masse,
- Trocknen der jeweils aufgetragenen Schicht, und
- Sintern der jeweils getrockneten Schicht mit dem Laserstrahl an ausgewählten Stellen zur Bildung des Formkörpers.

## Beschreibung

Die Erfindung betrifft ein Verfahren und eine Vorrichtung zur Herstellung von keramischen Formkörpern durch Sintern von ausgewählten Stellen eines keramischen Materials mit einem Laserstrahl zur Bildung des Formkörpers.

Bei der Entwicklung neuer Produkte werden industrielle Rapid-Prototyping-Verfahren eingesetzt, um nach digitalem Entwurf eines Prototypen mit einem CAD-Rechner einen Prototypen möglichst ohne weitere aufwendige Formherstellung automatisch zu fertigen. Hierdurch kann der Entwicklungszyklus bis zur Markteinführung des neuen Produktes verkürzt werden. Im allgemeinen arbeiten diese generativen Fertigungsverfahren schichtweise. Hierbei wird der digitale Konstruktionsentwurf des Prototypen in Schichten realisiert, die z. B. im Pulverbett oder mittels laminierter Schichten sukzessive aufgebaut werden. Bei den bekannten generativen Rapid-Prototyping-Verfahren werden in der Regel Kunststoffe oder Metalle als Ersatzmaterialien eingesetzt. Für den optimalen Generierprozess ist die Verwendung dieser Materialien in den handelsüblichen Anlagen zwingend. Der Einsatz anderer Materialien, insbesondere keramische Massen, ist in aller Regel nicht oder nur sehr eingeschränkt im Hinblick auf die Qualität des Bauteils möglich. Ein Problem bei der schichtweisen Herstellung eines Prototypens mit keramischen Materialien sind die Materialeigenschaften, wobei insbesondere die Oberflächenrauhigkeit und die Gefahr einer Rissbildung schwer beherrschbar ist.

Rapid-Prototyping-Verfahren sind zum Beispiel in Jensen, K.: State-Of-The-Art of Different Available and Coming RP-Systems. Proceedings of "2^{nd} Scandinavian Radid-Prototyping-Conference, Exhibition and Course" Aarhos, 1993 und Cheng X. Tucholke, U.: On Triangulating Surface Models for SLA, Proceedings the 2^{nd} International Conference on Rapid Prototyping, Dayton, Ohio, 23.-26.6.1991 hinreichend beschrieben. Die wesentlichen Merkmale dieser Verfahren sind die Erstellung von Prozesssteuerdaten aus CAD-Geometrie-Daten eines Formkörpers mit anschließender Steuerung von Bearbeitungseinrichtungen. Die Formgebung erfolgt nicht durch Materialabtrag, sondern durch Zugabe von Material oder durch den Phasenübergang eines Materials von z.B. von flüssig nach fest oder durch Kompaktierung eines pulverförmigen Ausgangsmaterials. Alle Rapid-Prototyping-Verfahren bauen Teilgeometrien aus Schichten endlicher Dicke, die durch einen sogenannten Slice-Prozess realisiert werden, direkt aus CAD-Geometrie-Daten auf.

Die verfügbaren Verfahren unterscheiden sich im Ausgangszustand der Materialien (fest, flüssig, gasförmig) bei der Schichtenaddition bzw. dem Bauprozess.

Eine Methode ist das selektive Lasersintern , die ursprünglich für Pulver aus Nylon, Polykarbonat und Wachsen entwickelt und später auf Metallpulver übertragen wurde. Hierbei werden in einem Reaktor auf einen Grünkörper Pulverschichten aufgesintert, wobei die Schmelztemperatur durch Einsatz von CO₂-Lasern erreicht wird. Diese Methode ist z. B. in Lakshminarayan, U., Zong, G., Richards, W., Marcus, H.: Solid Free Form Fabrication of Ceramics. Proceedings of the Symposium on Synthesis and Processing of Ceramics, Fall Meeting of the Material Research Society, Boston, Mass., Dez. 2-6, 1991 offenbart.

Eine andere Methode ist die Multiphase Jet Solidification (MJS), bei der Metallpulver-Bindergemische ähnlich dem Spritzgußverfahren durch computerkontrollierte verfahrbare Düsen zu Schichten verarbeitet werden, die dann wiederum das Bauteil aufbauen. Diese Methode ist z. B. in N.N.: Rapid Prototyping turns to PM vor new Solutions. Met. Powd. Rep. 3 (1995), 30-33, beschrieben.

Eine weitere Methode ist die Stereolithographie, bei der flüssige UV-sensitive Polymere als Ausgangsmaterialien verwendet werden, die schichtweise durch Lasereinstrahlung aushärten und auf dem Substrat abgeschieden werden. Das Werkstück wird sukzessive auf einer Plattform aufgebaut, die nach Aushärten der jeweiligen Schicht im Harzbad um die entsprechende Schichthöhe abgesenkt wird. Diese Methode ist z. B. in Pacheco, J.M.: Rapid Prototyping , MTIAC Report TA-91-01, Jan. 1991. Haase, B.: Stereolittography at Chrysler Motors, Mircrocad News, [8] 1990 und in Machlis, S.: Cubital Claims Advantages Over Stereolithography, Design News, 30 (1990) offenbart.

Bei der Methode des Solid Ground Curing (SGC) werden ebenfalls flüssige Polymere als Ausgangsmaterial verwendet. Nach Belichten durch UV-Strahlung härten dünne Polymerschichten an den gewünschten belichteten Stellen aus und bauen so ein Bauteil schichtweise auf. Diese Methode ist z. B. in N.N.: Rapid Prototyping turns to PM for new Solutions. Met. Powd. Rep. 3 (1995), 30-33, beschrieben.

In dieser Druckschrift ist auch die Methode des Simultaneous shot peening (SSP) offenbart, bei dem die Oberfläche einer geeigneten Form durch Besprühen mit flüssigem Metall abgebildet wird. Diese Abbildung kann beispielsweise als Teil eines Spritzgusswerkzeuges oder einer Pressform dienen.

In der Druckschrift ist weiterhin die Methode des Fused Deposition Modelling (FDM) beschrieben, bei der ähnlich zu dem MJS-Verfahren eine Düse numerisch gesteuert (NC) über das höhenverstellbare aufzubauende Werkstück gefahren wird. Durch schichtweises Abschneiden von geschmolzenem Material und entsprechendes Absenken der Plattform wird das Bauteil aufgebaut.

Eine weitere Methode ist das Laminated Object Manufacturing (LOM), die ursprünglich für die Herstellung von Komponenten aus Papier oder Kunststoff entwickelt wurde. Mit einem Laser werden aus einzelnen Lagen die entsprechenden Bauteilschichten geschnitten, die unter Verwendung von Klebern zum Werkstück zusammenlaminiert werden. Der Einsatz von Aliminiumoxyd als keramisches Material bei dem LOM-Verfahren ist aus Griffin, C. Danfenbach, J.D., McMillin, S.: Desktop Manufacturing: LOM vs Pressing. Am Ceram. Soc. Bull. 73 (1994), 109-113, beschrieben, bei dem mit Hilfe eines Lasers Folien geschnitten werden, die ihrerseits nach dem sogenannten Doctor-Blade-Verfahren hergestellt wurden.

Der Einsatz keramischer Materialien für das MJS-Verfahren ist ebenfalls möglich und wird derzeit an der Rutgers University, New Jersey, USA erforscht.

In der DE-OS 198 35 591 A1 ist ein Verfahren zur Herstellung von gesinterten keramischen Formkörpern unter Verwendung von Laserstrahlen offenbart. Hierbei wird ein keramisches Granulat schichtweise aufgetragen und mit einem Laserstrahl gesintert. Das Granulat wird durch Absieben, Reinigen und Wirbelschichttrocknen einer keramischen Suspension hergestellt, wobei nach dem ersten Absiebdurchgang das wirbelschichtgetrocknete Granulat gebrannt und anschließend nochmals abgesiebt wird.

Ein Problem bei den mit granuliertem keramischem Material hergestellten Formkörpern ist die eingeschränkte Abbildungsgenauigkeit.

Aufgabe der Erfindung war es daher, ein verbessertes Verfahren und eine Vorrichtung zur Herstellung von keramischen Formkörpern durch Sintern von ausgewählten Stellen eines keramischen Materials mit einem Laserstrahl zur Bildung des Formkörpers zu schaffen, mit dem eine verbesserte Abbildungsgenauigkeit, eine erhöhte mechanische Stabilität sowie eine verringerte Rissbildung des Formkörpers erreicht werden kann.

Die Aufgabe wird erfindungsgemäß durch Herstellung eines Grünkörpers aus einer flüssigen Suspension oder einer plastischen Masse und anschließendem Trocknen und selektiven Sinterns des Grünkörpers gelöst.

Durch den Einsatz von flüssigen Suspensionen oder plastischen Massen kann im Vergleich zur Verwendung pulverförmigen oder granulierten keramischen Materials die Dichte der Grünschichten gesteigert werden. Hierdurch können Schichtdicken von weniger als 100 µm realisiert werden. Die erhöhte Gründichte führt zu einer höheren Dichte nach dem Sintern und damit zu einer erhöhten mechanischen Stabilität. Weiterhin stützt das entstehende Bett der Grünschichten den gesinterten Prototypen. Daher ist es nicht notwendig Supportstrukturen in der Konstruktion zu berücksichtigen.

Am Beispiel von Porzellan wurde erkannt, dass bei der Bestrahlung pulverförmigen keramischen Materials mit dem Laser ein Schmelzbad entsteht, welches die Körner des Granulats nur wenig benetzt und aufgrund der Oberflächenspannung zur Tropfenbildung neigt. Es bilden sich daher mehr oder weniger große Tropfen mit einem Durchmesser von ca. 1,5 mm, die sich untereinander zum Formkörper verbinden. Die mechanische Stabilität des Formkörpers ist daher relativ gering, so dass eine Infiltration des Bauteils erforderlich ist, um eine zufriedenstellende Festigkeit zu erreichen.

Zur Herstellung des Formkörpers wird die flüssige Suspension oder plastische Masse schichtweise aufgetragen und die jeweilige Schicht des Materials mit dem Laserstrahl an ausgewählten Stellen gesintert. Hierbei wird der Laserstrahl vorzugsweise mittels der schichtweisen Konstruktionsdaten gesteuert.

Die Schichten werden vorzugsweise mit einer Dicke von etwa 100 µm aufgetragen. Hierdurch kann eine verbesserte Qualität des Formkörpers erzielt werden.

Die flüssige Suspension wird besonders vorteilhaft durch einen Spalt mit einer Spaltweite im Bereich von 250 bis 2000 µm, vorzugsweise etwa 500 µm, in einem länglichen hohlen Rakel aufgetragen. Die Suspension wird hierbei z. B. mittels Druckluft aus einer Speicherflasche durch den hohlen Rakel gepresst.

Das keramische Material wird vor der Sinterung zur Trocknung aufgeheizt. Hierzu kann es auf eine beheizte Platte aufgetragen werden, deren Temperatur anfänglich weniger als 100°C an ihrer Oberfläche betragen sollte, um ein Aufkochen des Wasseranteils in der Suspension zu verhindern. Mit steigender Schichtanzahl kann die Temperatur später auch über den Siedepunkt von Wasser gesteigert werden. Alternativ oder zusätzlich hierzu kann das Aufheizen der Schichten z.B. durch Strahlungsheizung erfolgen, wobei zur Erhöhung der Konvektion noch ein Lüfter vorgesehen sein sollte.

Nach dem Aufheizen erfolgt dann der Laserprozess. Dieser erfolgt mittels Einstellung des Energieeintrags zum Sintern durch Abstimmung von Laserleistung, Laserfokus und Bahngeschwindigkeit des Laserfokus auf dem Grünkörper.

Als keramisches Material ist für das Verfahren insbesondere Aluminiumoxyd (Al₂O₃), Porzellanpulver, hochreine Kieselsäure, Aluminiumnitrid (AIN), Silizium (Si) und Siliziumnitrid (Si₃N₄) geeignet.

Die Vorrichtung zur Herstellung von keramischen Formkörpern hat eine Auflagefläche, eine Auftragseinheit zum Auftragen von Schichten eines keramischen Materials, eine Trocknungseinheit für die aufgetragenen Schichten und eine Lasereinheit zur Erzeugung eines Laserstrahls mit Mitteln zum gesteuerten Ausrichten des Laserstrahls auf ausgewählte Stellen einer jeweiligen Schicht des keramischen Materials, um das bestrahlte Material zu sintern und den Formkörper zu bilden.

Die Auftragseinheit ist erfindungsgemäß zum Auftragen einer flüssigen Suspension oder einer plastischen Masse auf die Auflagefläche ausgebildet.

Die Mittel zum gesteuerten Ausrichten des Laserstrahls sind vorzugsweise als Laserscanner ausgebildet, wobei die Steuerung des Laserscanners mittels digitaler Konstruktionsdaten für das Formteil erfolgt. Damit kann eine Herstellung eines Prototyps direkt aus den Konstruktionsdaten erfolgen.

Die Auftragseinheit ist vorzugsweise als länglicher hohler Rakel mit einem Spalt ausgebildet, wobei die Spaltweite im Bereich von 250 bis 2000 µm liegt, vorzugsweise etwa 500 µm beträgt. Mit einer solchen Auftragseinheit kann insbesondere eine flüssige Supension aufgetragen werden. Die Auftragseinheit kann jedoch auch als Extruder o. ä. ausgebildet sein.

Die Erfindung wird nachfolgend anhand der beigefügten Zeichnung näher erläutert. Es zeigt:

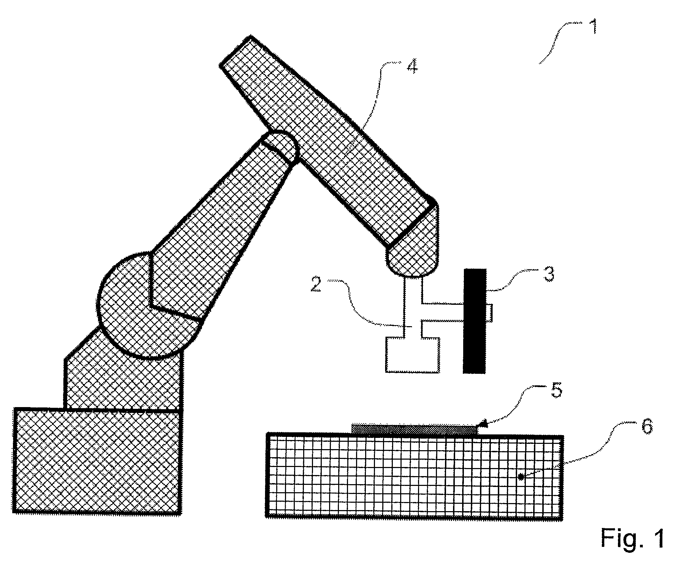

- Figur 1 -: schematische Ansicht einer Vorrichtung zur Herstellung von keramischen Formkörpern durch Sintern mit einem Laserstrahl.

Die Figur 1 lässt eine Vorrichtung (1) zur Herstellung von keramischen Formkörpern durch Sintern einer flüssigen Suspension oder plastischen Masse mit einem Laserstrahl erkennen. Das keramische Material wird in Form einer flüssigen Suspension oder plastischen Masse mittels Druckluft aus einer nicht dargestellten Speicherflasche durch einen hohlen Rakel (2) mit einem Öffnungsspalt gepresst, der eine Spaltweite von etwa 500 µm hat. Der Rakel (2) ist zusammen mit einer Lasereinheit (3) zur Erzeugung eines Laserstrahls an einem Roboterarm (4) angeordnet.

Zur Herstellung eines Formkörpers wird zunächst der Rakel (2) im vertikalen Abstand von etwa 100 µm über eine beheizte keramische Auflagefläche (5) bewegt, wobei das keramische Material in einer dünnen Schicht aufgetragen wird. Die beheizte Auflagefläche (5) hat anfänglich eine Temperatur von weniger als 100°C an ihrer Oberfläche, so dass ein Aufkochen des Wasseranteils der flüssigen Suspension während des Auftragens der ersten Schichten verhindert wird. Nach einer Trocknungszeit von bis zu 90 Sekunden wird die Lasereinheit (3) von dem Roboterarm (4) über die Oberfläche der aufgetragenen Schicht bewegt und die entsprechende Schicht des herzustellenden Formkörpers auf der aufgetragenen Schicht abgebildet.

Nach Abschluss des Laserprozesses wird eine neue Schicht einer flüssigen Suspension mit einer Dicke von etwa 100 µm aufgebracht, getrocknet und einem neuen Laserprozess unterzogen.

Die Temperatur zum Aufheizen des keramischen Materials an der Auflagefläche (5) kann mit steigender Schichtanzahl auch über die Siedetemperatur von Wasser deutlich gesteigert werden, da die bereits aufgebrachten Schichtlagen sehr saugfähig sind und die Feuchtigkeit der neuen Schicht innerhalb von Sekundenbruchteilen zunächst aufnehmen. Die neue Schicht der flüssigen Suspension wird dadurch stabilisiert und die Feuchtigkeit wird innerhalb von weniger als 30 Sekunden ausgetrieben.

Neben der Trocknung von unten über die Auflagefläche ist zusätzlich noch eine Strahlungsheizung vorgesehen, die auf die Oberfläche der aufgetragenen Schichten gerichtet ist. Zur Erhöhung der Konvektion sollte zusätzlich noch ein Lüfter vorgesehen sein. Die zusätzliche Trocknung von oben ist vorteilhaft, weil der durch die Sinterung entstandene Scherben des Formkörpers isolierend wirkt und damit die Temperatur der obersten Schichten für eine ausreichend schnelle Trocknung in der Regel zu niedrig ist.

Die mit dem beschriebenen Verfahren herstellbaren Grünschichten des Formkörpers weisen am Beispiel von Porzellan maximal 40 % Porosität auf.

Die Steuerung des Roboterarmes (4) erfolgt mit den digitalen Konstruktionsdaten, die mit einem CAD-System entworfen, geeignet in Schichten geschnitten und als Datensatz für eine numerisch kontrollierte Bearbeitungsmaschine (NC-Datensatz) exportiert werden. Die nicht mit dem Laserstrahl beaufschlagten Stellen des keramischen Materials können später leicht nach Aufweichen in einem flüssigen Lösungsmittel entfernt werden.

Erfindungsgemäß wird zur Herstellung der Grünschichten eine speziell eingestellte flüssige Suspension oder plastische Masse eingesetzt. Der Vorteil des Einsatzes von flüssiger Suspension besteht gegenüber Granulaten darin, dass die Gründichte vergleichbar zu keramischen Scherben hergestellt im konventionellen Schlickerguss ist. Die herkömmlicherweise verwendeten Granulate besitzen eine deutlich geringere Schüttdichte. Bei der Bestrahlung der Granulate mit dem Laser entsteht ein Schmelzbad, welches die Granulate nur wenig benetzt. Aus diesem Grund neigt das Schmelzbad bei lockerer Schüttung der Granulate zur Tropfenbildung, so dass sich mehr oder wenige große Tropfen bilden, die sich untereinander zum Formkörper verbinden. Dies führt zu einer relativ geringen mechanischen Stabilität. Durch den Einsatz einer flüssigen Suspension oder plastischen Masse können hingehen Schichten geringerer Dicke und einer Porosität unter 40 % (bis 100 µm) aufgetragen werden, die eine verbesserte Partikelbindung aufweist.

## Patentansprüche

1. Verfahren zur Herstellung von keramischen Formkörpern durch Sintern von ausgewählten Stellen eines keramischen Materials mit einem Laserstrahl zur Bildung des Formkörpers, **gekennzeichnet durch** Auftragen von mindestens einer Schicht einer flüssigen Suspension oder plastischen Masse, Trocknen der jeweils aufgetragenen Schicht und Sintern der jeweils getrockneten Schicht mit dem Laserstrahl an ausgewählten Stellen zur Bildung des Formkörpers.

2. Verfahren nach Anspruch 1, **dadurch gekennzeichnet, dass** die Dichte des durch mindestens eine aufgetragene Schicht erzeugten Grünkörpers weniger als 40% Porosität besitzt.

3. Verfahren nach Anspruch 2, **dadurch gekennzeichnet, dass** die Schichten eine Dicke von 10 bis 200 µm haben.

4. Verfahren nach einem der Ansprüche 1 bis 3, **dadurch gekennzeichnet, dass** die Einstellung des Energieeintrags zum Sintern durch Abstimmung von Laserleistung, Laserfokus und Bahngeschwindigkeit des Laserfokus auf dem Grünkörper erfolgt.

5. Verfahren nach einem der vorhergehenden Ansprüche, **dadurch gekennzeichnet, dass** das keramische Material Aluminiumoxyd (Al₂O₃) Porzellanpulver, hochreine Kieselsäure, Aluminiumnitrid (AIN), Silizium (Si), Siliziumnitrid (Si₃N₄ ) aufweist.

6. Verfahren nach einem der vorhergehenden Ansprüche, **gekennzeichnet durch** Auftragen der flüssigen Suspension **durch** einen Spalt in einem länglichen hohlen Rakel (2), wobei die Spaltweite im Bereich von 250 bis 2000 µm liegt.

7. Vorrichtung (1) zur Herstellung von keramischen Formkörpern mit:
- einer Auflagefläche (4);
- einer Auftragseinheit zum Auftragen von Schichten eines keramischen Materials in Form einer flüssigen Suspension oder einer plastischen Masse auf die Auflagefläche (5);
- einer Trocknungseinheit (6) für die aufgetragenen Schichten; und
- einer Lasereinheit (3) zur Erzeugung eines Laserstrahls mit Mitteln zum gesteuerten Ausrichten des Laserstrahls auf ausgewählte Stellen der jeweiligen Schicht des keramischen Materials, um das laserbestrahlte Material zu sintern und den Formkörper zu bilden.
